(19) Europäisches Patentamt
European Patent Office
Office européen des brevets

(11) **EP 4 307 513 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **22184329.5**

(22) Anmeldetag: **12.07.2022**

(51) Internationale Patentklassifikation (IPC):
*H02J 3/46* (2006.01)      *H02J 3/38* (2006.01)

(52) Gemeinsame Patentklassifikation (CPC):
**H02J 3/466; H02J 3/381**

(54) **VERFAHREN UND STEUERVORRICHTUNG ZUR STEUERUNG VON ENERGIEAUSTAUSCHEN ZWISCHEN MEHREREN ENERGIESYSTEMEN ÜBER EIN STROMNETZ**

METHOD AND CONTROL DEVICE FOR CONTROLLING THE EXCHANGE OF ENERGY BETWEEN SEVERAL ENERGY SYSTEMS VIA AN ENERGY NETWORK

PROCÉDÉ ET DISPOSITIF DE COMMANDE DESTINÉ À LA COMMANDE DES ÉCHANGES D'ÉNERGIE ENTRE PLUSIEURS SYSTÈMES D'ÉNERGIE PAR L'INTERMÉDIAIRE D'UN RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.01.2024 Patentblatt 2024/03**

(73) Patentinhaber: **Siemens Aktiengesellschaft 80333 München (DE)**

(72) Erfinder:
• **Amthor, Arvid
  98631 Grabfeld OT Nordheim (DE)**
• **Schreck, Sebastian
  90439 Nürnberg (DE)**
• **Schütz, Thomas
  90765 Fürth (DE)**
• **Sudhoff, Robin
  91052 Erlangen (DE)**

(74) Vertreter: **Siemens Patent Attorneys
Postfach 22 16 34
80506 München (DE)**

(56) Entgegenhaltungen:
**DE-A1- 102008 037 575      DE-A1- 102013 217 572**

**Beschreibung**

Die Erfindung betrifft ein Verfahren gemäß dem Oberbegriff des Patentanspruches 1 sowie eine Steuervorrichtung gemäß dem Oberbegriff des Patentanspruches 10.

Energiesysteme, beispielsweise Stadtviertel, Gemeinden, Gebäude, industrielle Anlagen und dergleichen, umfassen typischerweise verschiedene energietechnische Anlagen, beispielsweise Erzeugungs-, Verbrauchs- und/oder Speicheranlagen. Eine möglichst effiziente Allokation der im Gesamtsystem erzeugten und verbrauchten Energie sowie der Energieaustausch über ein zugehöriges Verteilnetz (Stromnetz) ist eine technische Herausforderung, die beispielsweise mittels eines lokalen Energiemarktes gelöst werden kann.

Eine solche lokale Energiemarktplattform für Stromnetze ist beispielsweise aus dem Dokument EP 3518369 A1 bekannt.

Aus dem genannten Dokument ist es bekannt, bestehende Flexibilitäten, beispielsweise durch Energiespeicher, zu nutzen. Dadurch können Erzeugungsspitzen und/oder Lastspitzen reduziert werden, sodass eine erhöhte Belastung des zugehörigen Stromnetzes abgemildert oder vermieden werden kann. Weiterhin könnten regelbare Anlagen, insbesondere Photovoltaikanlagen, eine zusätzliche Flexibilität für das Stromnetz bereitstellen. Diese bleibt jedoch nach dem Stand der Technik ungenutzt, da bisher die maximale Einspeiseleistung der Anlagen pauschal und unabhängig vom Stromnetz abgeregelt wird. Zur Vermeidung von Erzeugungsspitzen wird beispielsweise die Einspeiseleistung von Photovoltaikanlagen pauschal und dauerhaft auf 70 Prozent der Anlagennennleistung beschränkt. T

DE 10 2008 037575 A1 und DE 10 2013 217572 A1 sind exemplarische Dokumente die Energieaustausch zwischen mehreren Energiesystemen zeigen.

Der vorliegenden Erfindung liegt die Aufgabe zugrunde, innerhalb eines Stromnetzes vorhandene Flexibilitäten verbessert zu nutzen.

Die Aufgabe wird durch ein Verfahren mit den Merkmalen des unabhängigen Patentanspruches 1 sowie durch eine Steuervorrichtung mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Steuerung von Energieaustauschen zwischen mehreren Energiesystemen $i$ über ein Stromnetz mittels einer zentralen Steuervorrichtung, wobei die Steuervorrichtung ein Optimierungsmodul umfasst, welches dazu ausgebildet ist, basierend auf einer Zielfunktion sowie von den Energiesystemen $i$ übermittelten Daten die zu den Energieaustauschen zugehörigen Leistungen $P_{i;t}$ innerhalb eines festgelegten Zeitbereich $T = \mathbf{U}_t\,\Delta t_t$ durch ein Optimierungsverfahren zu ermitteln, wobei wenigstens eines der Energiesysteme $i^*$ eine bezüglich ihrer Leistung abregelbare Anlage umfasst, ist gekennzeichnet durch wenigstens die folgenden Schritte:

- Übermitteln einer maximalen Energiemenge $E_{i;\max}$ für den festgelegten Zeitbereich $T$ durch jedes der Energiesysteme $i$ an die Steuervorrichtung;
- Übermitteln eines Abregelfaktors $\alpha$ für die abregelbare Anlage durch das zugehörige Energiesystem $i^*$ an die Steuervorrichtung;
- Ermitteln der Energieaustausche durch das Optimierungsmodul, wobei beim Optimierungsverfahren die Nebenbedingung

$$\alpha E_{i^*;\max} \leq \sum_{t \in T} P_{i^*;t}\,\Delta t_t \leq E_{i^*;\max}$$

verwendet wird; und
- Steuern der Energieaustausche innerhalb des Zeitbereiches $T$ gemäß der ermittelten Leistungen $P_{i;t}$.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Beispielsweise ist das Optimierungsmodul als Softwaremodul ausgebildet, wobei das Optimierungsverfahren numerisch durchgeführt wird.

Aus struktureller Sicht definiert insbesondere der IPCC Fifth Assessment Report ein Energiesystem als: "Alle Komponenten, die sich auf die Erzeugung, Umwandlung, Lieferung und Nutzung von Energie beziehen" (Annex I, Seite 1261).

Energiesysteme umfassen typischerweise mehrere Komponenten, insbesondere energietechnische Anlagen, beispielsweise Energiewandlungsanlagen, Verbrauchsanlagen und/oder Speicheranlagen. Hierbei können Energiesysteme mehrere Energieformen erzeugen und/oder bereitstellen (multimodale Energiesysteme). Insbesondere stellt ein solches Energiesystem für einen Verbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung gekoppelt. Energiesysteme sind beispielsweise Gebäude, insbesondere Wohngebäude und/oder Bürogebäude, und/oder industrielle Anlagen.

Als energietechnische Anlage kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Energiespeicher, insbesondere Batteriespeicher, Biomasseanlagen, Biogasanlagen, Müllverbrennungsanlagen, industrielle Anlagen, konventionelle Kraftwerke und/oder dergleichen.

Dem vorliegenden Verfahren liegen somit mehrere Energiesysteme, beispielsweise Gebäude, die über ein Stromnetz Energie austauschen zugrunde. Hierbei können die Energiesysteme in das Stromnetz eine Leistung einspeisen und/oder ausspeisen. Durch eine für einen bestimmten Zeitbereich in das Stromnetz eingespeiste und/oder ausgespeiste Leistung bildet sich eine bestimmte zwischen den Energiesystemen ausgetauschte Energie beziehungsweise Energiemenge aus, das heißt es erfolgt ein Energieaustausch zwischen den Energiesystemen.

Die Energieaustausche zwischen den Energiesystemen werden mittels der bezüglich der Energiesysteme zentralen Steuervorrichtung gesteuert beziehungsweise geregelt. Hierbei erfolgt die Steuerung mittels des Optimierungsmoduls der Steuervorrichtung, welches dazu ausgebildet ist, ein Optimierungsverfahren durchzuführen. Ein Optimierungsverfahren im Sinne der vorliegenden Erfindung ist ein numerisches Verfahren, bei welchem Sollwerte für die Leistungen, die den Energieaustauschen zugrunde liegen, ermittelt werden. Die genannten Leistungen beziehungsweise Leistungswerte sind hierbei Variablen einer festgelegten Zielfunktion, die im Rahmen des Optimierungsverfahrens minimiert oder maximiert wird. Mit anderen Worten legt das Minimum oder Maximum der Zielfunktion die Leistungen beziehungsweise ihre Sollwerte für die Steuerung fest. Die Zielfunktion modelliert hierbei typischerweise ein technisches Ziel, welches für die Energieaustausche verfolgt wird, beispielsweise eine bestmögliche Übereinstimmung von Erzeugung und Verbrauch, eine möglichst geringe Kohlenstoffdioxidemission oder einen möglichst großen Energieumsatz.

Die Optimierung beziehungsweise das Optimierungsverfahren erfolgt über den festgelegten Zeitbereich $T$, der in kleinere Zeitschritte beziehungsweise Zeitintervalle $\Delta t_t$ unterteilt ist. Beispielsweise ist der Zeitbereich $T$ ein Tag und $\Delta t_t$ eine Stunde und/oder eine viertel Stunde.

Zu einem Energieaustausch innerhalb des Zeitbereiches $\Delta t_t$ ist eine Leistung $P_{i;t}$ zugehörig. Mit anderen Worten sind die Leistungen, die mittels des Optimierungsverfahrens ermittelt werden, innerhalb der kleineren Zeitbereiche $\Delta t_t$ konstant. Grundsätzlich sind die Leistungen somit über den Zeitbereich $T$ zeitabhängig.

Gemäß der vorliegenden Erfindung umfasst wenigstens eines der Energiesysteme eine abregelbare Anlage. Hierbei kann die Leistung der Anlage zeitlich variabel abgeregelt, das heißt reduziert werden. Abregelbare Anlagen können unabhängig davon, ob eine Einspeisung oder Ausspeisung vorliegt, Photovoltaikanlagen, Windkraftanlage, Wärmepumpen, Kältemaschinen, Ladevorgänge für Elektrofahrzeuge und/oder dergleichen sein.

In einem ersten Schritt des erfindungsgemäßen Verfahrens übermittelt jedes der Energiesysteme eine maximale Energiemenge $E_{i;max}$ für den festgelegten Zeitbereich $T$ an die Steuervorrichtung. Für diskrete Zeitschritte ist beispielsweise $E_{i;max} = \Sigma_{t \in T} P_{i;max;t} \Delta t_t$ mit $P_{i;max;t}$ die maximale Leistung pro Zeitschritt. Äquivalent zum Übermitteln der maximalen Energiemenge ist somit das Übermitteln der maximalen Leistungen $P_{i;max;t}$ für jeden Zeitschritt. Erfindungsgemäß ist somit ebenfalls das Übermitteln der maximalen Leistung $P_{i;max;t}$ an die Steuervorrichtung vorgesehen. Durch den ersten Schritt ist die Steuervorrichtung somit in Kenntnis darüber, welches Energiesystem welche maximale Energiemenge und/oder welche maximale gegebenenfalls zeitabhängige Leistung einspeisen und/oder ausspeisen kann beziehungsweise möchte.

In einem zweiten Schritt des erfindungsgemäßen Verfahrens übermittelt das Energiesystem, welches die abregelbare Anlage umfasst, einen Abregelfaktor an die Steuervorrichtung. Umfassen mehrere Energiesysteme eine oder mehrere abregelbare Anlagen, dann kann jedes dieser Energiesysteme für jede seiner Anlagen einen zugehörigen Abregelfaktor an die Steuervorrichtung übermitteln. Dadurch ist die Steuervorrichtung in Kenntnis darüber, wie weit die Leistung der abregelbaren Anlage beschränkt werden kann. Der Abregelfaktor kann durch das Energiesystem, durch den Hersteller, durch einen Netzbetreiber des Stromnetzes und/oder durch den Gesetzgeber festgelegt sein.

In einem dritten Schritt des erfindungsgemäßen Verfahrens werden die für die Steuerung vorgesehenen Leistungen beziehungsweise die Sollleistungen durch das Optimierungsverfahren ermittelt. Hierbei basiert das Optimierungsverfahren auf den durch die Energiesysteme übermittelten Daten. Erfindungsgemäß wird bei der Optimierung die Nebenbedingung

$$\alpha E_{i^*;\max} \leq \sum_{t \in T} P_{i^*;t} \Delta t_t \leq E_{i^*;\max}$$

verwendet beziehungsweise berücksichtigt. Die Nebenbedingung erfordert somit die übermittelten Daten. Die verwendete Nebenbedingung hat die technische Wirkung, dass der tatsächliche für die Steuerung verwendete Abregelfaktor nicht fest ist, sondern dynamisch einen Wert im Bereich von $\alpha$ und 1 aufweist. Mit anderen Worten wird zugehörig zur ermittelten Leistung $\boldsymbol{P_{i^*;t}}$ ein effektiver Abregelfaktor durch $\alpha_{\textbf{eff}} = \Sigma_{t \in T}\, \boldsymbol{P_{i^*;t}}\, \Delta t_t / \boldsymbol{E_{i^*;max}}$ für die Anlage ausgebildet. Die Anlage wird somit nicht pauschal mit dem festgelegten Abregelfaktor $\alpha$ abgeregelt, sondern es wird ihre Flexibilität genutzt. Der tatsächlich verwendete dynamische Abregelfaktor wird somit gemäß der Zielfunktion optimal ermittelt. Eine pauschale beziehungsweise vorab festgelegte Abregelung der Anlage gemäß $\alpha$ erfolgt somit erfindungsgemäß nicht.

In einem vierten Schritt des erfindungsgemäßen Verfahrens werden die Energieaustausche beziehungsweise Leistungsaustausche innerhalb des Zeitbereiches $\boldsymbol{T}$ gemäß der ermittelten Leistungen $\boldsymbol{P_{i;t}}$ gesteuert.

Hierbei erfolgt die Steuerung typischerweise mittelbar durch die Steuervorrichtung. Die Steuervorrichtung hat mittels der durchgeführten Optimierung Sollwerte für die Leistungen jedes Energiesystems ermittelt. Diese Sollwerte werden dann an die jeweiligen Energiesysteme übermittelt. Innerhalb der Energiesysteme werden die Sollwerte der Leistungen durch Steuereinheiten und/oder Regeleinheiten umgesetzt, die entsprechende Steuersignale an die jeweiligen Anlagen übermittelt.

Ein Vorteil des erfindungsgemäßen Verfahrens ist, dass im Gegensatz zu einer pauschalen Abregelung die Leistung beziehungsweise die Abregelung im Hinblick darauf ermittelt wird, ob eine Abregelung, beispielsweise aufgrund von Netzrandbedingungen des Stromnetzes, technisch sinnvoll ist. Es erfolgt somit nicht per se eine Abregelung, sondern lediglich dann, wenn sie technisch vorteilhaft ist.

Durch die Information über vorhandene Flexibilitäten beziehungsweise steuerbare/abregelbare Lasten können diese durch die Optimierung derart verschoben werden, dass eine Abregelung nicht erforderlich ist. Somit müssen erneuerbare Energien nicht ohne technischen Grund pauschal abgeregelt werden.

Weiterhin hat ein Netzbetreiber des Stromnetzes durch die vorliegende Erfindung die Möglichkeit je nach Belastung des Stromnetzes den Abregelfaktor dynamisch einzustellen. Dadurch kann in Netzabschnitten, die kaum von zu hoher Erzeugung betroffen sind, eine unbegründete Abregelung, beispielsweise wie durch die statische 70 Prozent Regel, vermieden werden. Dies mindert Ausgleichszahlungen für die unbegründete Abregelung, sowie mögliche $CO_2$-Emissionen für einen Ersatz der abgeregelten Erzeugung an anderer Stelle und zu einem anderen Zeitpunkt im Netzgebiet durch konventionelle Kraftwerke.

Die erfindungsgemäße Steuervorrichtung zur Steuerung von Energieaustauschen zwischen mehreren Energiesystemen i über ein Stromnetz, wobei die Steuervorrichtung ein Optimierungsmodul umfasst, welches dazu ausgebildet ist, basierend auf einer Zielfunktion sowie von den Energiesystemen $\boldsymbol{i}$ übermittelten Daten die zu den Energieaustauschen zugehörigen Leistungen $\boldsymbol{P_{i;t}}$ innerhalb eines festgelegten Zeitbereich $\boldsymbol{T} = \boldsymbol{U_t}\Delta t_t$ durch ein Optimierungsverfahren zu ermitteln, wobei wenigstens eines der Energiesysteme $\boldsymbol{i^*}$ eine bezüglich ihrer Leistung abregelbare Anlage umfasst, ist dadurch gekennzeichnet, dass die Steuervorrichtung dazu ausgebildet ist:

- eine maximale Energiemenge $\boldsymbol{E_{i;max}}$ für den festgelegten Zeitbereich $\boldsymbol{T}$ von jedem der Energiesysteme $\boldsymbol{i}$ zu empfangen;
- einen Abregelfaktor $\alpha$ für die abregelbare Anlage von dem zugehörigen Energiesystem $\boldsymbol{i^*}$ zu empfangen;
- die Energieaustausche durch das Optimierungsmodul zu ermitteln, wobei das Optimierungsmodul dazu ausgebildet ist, beim Optimierungsverfahren die Nebenbedingung

$$\alpha E_{i^*;\text{max}} \leq \sum_{t \in T} P_{i^*;t}\, \Delta t_t \leq E_{i^*;\text{max}}$$

zu verwenden; und
- die Energieaustausche innerhalb des Zeitbereiches $\boldsymbol{T}$ gemäß der ermittelten Leistungen $\boldsymbol{P_{i;t}}$ zu steuern.

Es ergeben sich zum erfindungsgemäßen Verfahren gleichartige, gleichwertige und gleichwirkende Vorteile und/oder Ausgestaltungen der erfindungsgemäßen Steuervorrichtung.

Gemäß einer vorteilhaften Ausgestaltung der Erfindung weist der Abregelfaktor $\alpha$ einen Wert im Bereich von 0 bis 1, insbesondere im Bereich von 0.7 bis 1, auf.

Der Abregelfaktor $\alpha$ bildet im Sinne der vorliegenden Erfindung einen maximalen Abregelfaktor aus, da dieser beziehungsweise der für die Steuerung tatsächlich verwendete effektive Abregelfaktor durch die Nebenbedingung $\alpha E_{i^*;\text{max}} \leq \Sigma_{t \in T}\, P_{i^*;t}\, \Delta t_t \leq \boldsymbol{E_{i^*;\text{max}}}$ dynamisiert wird. Der Abregelfaktor $\alpha$ gibt somit an, bis zu welcher Leistung die Anlage maximal abgeregelt werden kann beziehungsweise muss, sodass ein Wert im Bereich zwischen 0 und 1 technisch sinnvoll ist. Für Photovoltaikanlagen weist $\alpha$ beispielsweise einen Wert von 70 Prozent (0.7) auf.

In einer vorteilhaften Weiterbildung der Erfindung übermittelt jedes der Energiesysteme i eine maximale Leistung $P_{i;\text{max};t}$ an die Steuervorrichtung, wobei beim Optimierungsverfahren die zusätzlichen Nebenbedingungen

$P_{i;t} \leq P_{i;\max;t}$ verwendet werden.

Dadurch ist vorteilhafterweise technisch sichergestellt, dass das Ergebnis der Optimierung, die Sollleistungen, die maximale Leistung des jeweiligen Energiesystems beziehungsweise seiner Anlagen zu jedem Zeitpunkt respektiert. Die Anlagen beziehungsweise die Energiesysteme werden somit maximal bis zu ihrer übermittelten maximalen Leistung belastet. Weitere Nebenbedingungen können zum Erreichen technischer Ziele, beispielsweise Netzrandbedingungen, vorgesehen sein, das heißt bei der Optimierung verwendet werden.

Gemäß einer bevorzugten Ausgestaltung der Erfindung werden die mittels des Optimierungsverfahrens ermittelten Leistungen $P_{i;t}$ (Sollwerte beziehungsweise Sollleistungen) an eine jeweilige Steuereinheit des jeweiligen Energiesystems $i$ zur Steuerung der Energieaustausche übermittelt.

Dadurch werden vorteilhafterweise die durch die Steuervorrichtung ermittelten Sollwerte lokal umgesetzt, das heißt es erfolgt das Steuern der Energieaustauche zwischen den Energiesystemen gemäß der ermittelten Sollleistungen.

In einer vorteilhaften Weiterbildung der Erfindung ist die abregelbare Anlage als Photovoltaikanlage mit einem regelbaren Wechselrichter ausgebildet.

Das ist deshalb von Vorteil, da typischerweise Photovoltaikanlagen mittels ihres zugehörigen Wechselrichters auf eine Einspeiseleistung von 70 Prozent ihrer maximal möglichen Einspeiseleistung begrenzt werden. Vorteilhafterweise ist dies durch die vorliegende Erfindung nicht mehr erforderlich beziehungsweise vorteilhafterweise entfällt die genannte starre und pauschale Abregelung. Je nach Netzerfordernis liegt der Einspeisung ein dynamischer Abregelfaktor im Bereich von 70 Prozent und 100 Prozent zugrunde.

Besonders bevorzugt weist der übermittelte Abregelfaktor für Photovoltaikanlagen einen Werte von 70 Prozent beziehungsweise von 0.7 auf. Die verwendete Nebenbedingung ist somit $0.7 \cdot \boldsymbol{E}_{i^*;\max} \leq \Sigma_{t \in T} P_{i^*;t} \Delta t_t \leq E_{i^*;\max}$. Diese ist äquivalent zu einem dynamischen Abregelfaktor im Bereich von 0.7 bis 1.

Gemäß einer vorteilhaften Ausgestaltung der Erfindung übermitteln innerhalb des Zeitbereiches $T$ in das Stromnetz einspeisende Energiesysteme $j$ einen Gewichtungsfaktor $g_{j;\min;t}^{\mathrm{in}}$ und aus dem Stromnetz ausspeisende Energiesysteme $k$ einen Gewichtungsfaktor $g_{k;\max;t}^{\mathrm{out}}$ an die Steuervorrichtung, wobei die Zielfunktion des Optimierungsproblems wenigstens den Term $\sum_{j \neq k;t \in T}[P_{j;t}^{\mathrm{in}} g_{j;t}^{\mathrm{in}} - P_{k;t}^{\mathrm{out}} g_{k;t}^{\mathrm{out}}]$ umfasst, wobei $P_{j;t}^{\mathrm{in}}$ eine Leistungseinspeisung des zugehörigen Energiesystems j in das Stromnetz und $P_{i;t}^{\mathrm{out}}$ eine Leistungsausspeisung des zugehörigen Energiesystems i aus dem Stromnetz kennzeichnet, wobei die für die Steuerung vorgesehenen Leistungen $P_{j;t}^{\mathrm{in}}$, $P_{j;t}^{\mathrm{out}}$ und die Gewichtungen $g_{j;t}^{\mathrm{in}}$, $g_{k;t}^{\mathrm{out}}$ durch das Optimierungsverfahren unter den zusätzlichen Nebenbedingungen $g_{j;\min;t}^{\mathrm{in}} \leq g_{j;t}^{\mathrm{in}}$ und $g_{k;t}^{\mathrm{out}} \leq g_{k;\max;t}^{\mathrm{out}}$ ermittelt werden.

Vorteilhafterweise können dadurch in das Stromnetz einspeisende Energiesysteme von in das Stromnetz ausspeisende Energiesysteme unterschieden werden. Dies erfolgt durch die verschiedenen Gewichtungsfaktoren und ihren verschiedenen Eingang (Gewichtung und Vorzeichen) in die verwendete Zielfunktion. Die Gewichtungen können insbesondere Kohlenstoffdioxidemissionen kennzeichnen, sodass durch ein Minimieren der Zielfunktion ein Minimum des umgesetzten Kohlenstoffdioxidvolumens erreicht wird. Weiterhin wird durch die verwendete Zielfunktion eine bestmögliche Übereistimmung von Erzeugung und Verbrauch ermöglicht, die zudem noch verschieden gewichtet werden können. Die genannte Zielfunktion ist insbesondere dann von Vorteil, wenn die Steuervorrichtung eine lokale Energiemarktplattform ausbildet.

In einer vorteilhaften Ausgestaltung der Erfindung ist der Zeitbereich $T$ ein Tag.

Vorteilhafterweise können dadurch im Sinne der Optimierung möglichst effiziente Energieaustausche für einen kommenden Tag, insbesondere für den nächsten Tag, ermittelt werden.

Gemäß einer vorteilhaften Ausgestaltung der Erfindung wird der Zeitbereich $T$ in regelmäßige Zeitschritte $\Delta t_t = \Delta t$ unterteilt.

Dadurch wird vorteilhafterweise das Optimierungsverfahren effizienter und kann in kürzer Rechenzeit durchgeführt werden. Weiterhin weisen Netzregeleinheiten, die für die Regelung von Stromnetzen vorgesehen sind, typischerweise eine zeitlich regelmäßige Auflösung auf, beispielsweise gemäß 15-minütiger Zeitintervalle. Dadurch ist das vorliegende Verfahren vorteilhafterweise an die zeitliche Auflösung der Netzregeleinheit des Stromnetzes anpassbar.

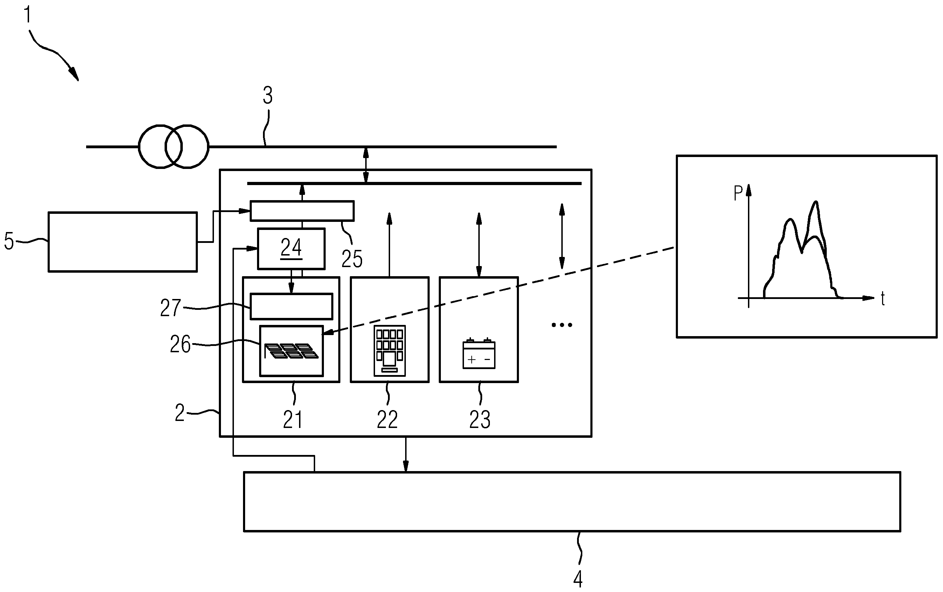

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert eine Steuervorrichtung gemäß einer Ausgestaltung der vorliegenden Erfindung.

Gleichartige, gleichwertige oder gleichwirkende Elemente können in der Figur mit denselben Bezugszeichen versehen sein.

Die Figur zeigt eine bezüglich mehrerer Energiesysteme 2 zentrale Steuervorrichtung 4 zur Steuerung von Energieaustauschen zwischen mehreren Energiesystemen 2 über ein Stromnetz 3 gemäß einer Ausgestaltung der vorliegenden Erfindung. Aus Übersichtsgründen ist in der Figur lediglich eines der Energiesysteme 2 dargestellt.

Die Steuervorrichtung 4 ist in ein System 1 eingebettet, welches wenigstens die mehreren Energiesysteme 2, das Stromnetz 3 sowie eine Netzregeleinheit 5 zur Regelung des Stromnetzes 3 umfasst.

Das dargestellte Energiesystem 2 umfasst eine abregelbare Anlage 21, einen oder mehrere Verbraucher 22 sowie einen oder mehrere Energiespeicher 23, insbesondere Batteriespeicher.

Die abregelbare Anlage 21 umfasst einen Wechselrichter 26 sowie eine Photovoltaikanlage 27. Mittels des Wechselrichters 26 ist die Leistung der Photovoltaikanlage 27 wenigstens zwischen ihrer maximalen Leistung (Peakleistung) und einer durch einen Abregelfaktor $\alpha$ festgelegten minimalen Leistung einstellbar. Typischerweise weist $\alpha$ den Wert 0.7 auf.

Zur grundsätzlichen Steuerung/Regelung der abregelbaren Anlage 21 weist das Energiesystem 2 eine lokale Steuereinheit 24 auf.

Weiterhin umfasst das Energiesystem 2 zum Datenaustausch mit der zentralen Steuervorrichtung 4 ein Kommunikationsmodul 25. Mittels des Kommunikationsmoduls 25 kann somit das Energiesystem Daten/Informationen an die Steuervorrichtung 4 übermitteln. Dies ist durch einen Pfeil vom Energiesystem 2 zur Steuervorrichtung 4 in der Figur angedeutet.

Weiterhin kann die Steuervorrichtung 4 Daten, insbesondere Sollleistungswerte, über das Kommunikationsmodul 25 an das Energiesystem 2 und/oder direkt an die lokale Steuereinheit 24 übermitteln. Dies ist durch einen Pfeil von der Steuervorrichtung 4 zur Steuereinheit 24 angedeutet.

Das Kommunikationsmodul 25 kann weiterhin Daten mit der Netzregeleinheit 5 austauschen. Insbesondere kann die Netzregeleinheit 5 Daten, die die Steuerung der Anlagen 21, 22, 23 beziehungsweise des Energiesystems 2 betreffen, beispielsweise Netzrandbedingungen, an das Kommunikationsmodul 25 und somit an das Energiesystem 2 übermitteln. Dies ist durch einen Pfeil von der Netzregeleinheit 5 zum Kommunikationsmodul 25 angedeutet.

Die Steuervorrichtung 4 ist dazu ausgebildet, basierend auf aus den Energiesystemen 2 übermittelten Daten, Sollwerte für die zeitabhängigen Leistungen innerhalb eines festgelegten Zeitbereiches, beispielsweise für einen Tag, zu ermitteln. Hierzu weist die Steuervorrichtung 4 ein Optimierungsmodul auf. Hierbei kann die Steuervorrichtung 4 als lokale Energiemarktplattform ausgebildet sein. Die ermittelten Sollleistungen werden anschließend an die lokalen Steuereinheiten 24 zur Durchführung der entsprechenden Energieaustausche über das Stromnetz 3 unmittelbar oder mittelbar, beispielsweise über das Kommunikationsmodul 5, übermittelt. Die lokalen Steuereinheiten 24 führen dann die Energieaustausche entsprechend den ermittelten und übermittelten Sollleistungen aus, das heißt die Steuereinheiten 24 geben entsprechende Steuersignale an die Anlagen 21, 22, 23 weiter.

Das dargestellte Energiesystem 2 weist die abregelbare Anlage 21 auf. Gemäß der vorliegenden Erfindung werden eine maximale Energiemenge und/oder eine maximale zeitabhängige Leistung sowie einen Abregelfaktor für die Anlage 21 an die Steuervorrichtung 4, beispielsweise mittels des Kommunikationsmoduls 25, übermittelt.

Basierend auf der übermittelten maximalen Energiemenge $E_{i^*;max}$ beziehungsweise maximalen zeitabhängigen Leistung $P_{i^*;max;t}$ (zeitabhängige Maximalleistung) und den übermittelten Abregelfaktor ermittelt die Steuervorrichtung 4 mittels ihres Optimierungsmoduls wenigstens die Sollleistung für die Anlage 21. Hierbei wird die Nebenbedingung $E_{i^*;max} \leq \Sigma_{t \in T} P_{i^*;t} \Delta t_t \leq E_{i^*;max}$ berücksichtigt. Die Nebenbedingung führt technisch zu einem effektiven, dynamischen Abregelfaktor. Hierbei ist $P_{i^*;t}$ die Optimierungsvariable für die Anlage 21 und ihr durch das Optimierungsverfahren bestimmter Wert entspricht der Sollleistung der Anlage 21. Die ermittelte Sollleistung wird an das Energiesystem 2 übermittelt. Die Anlage 21 wird somit gemäß der ermittelten Sollleistung $P_{i^*;t}$ gesteuert.

Dadurch wird die Anlage 21 nicht starr auf eine festgelegte Leistung abgeregelt, sondern ihre Flexibilität bezüglich ihrer Leistung wird netzdienlich verwendet.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

1　　System
2　　Energiesystem
3　　Stromnetz
4　　zentrale Steuervorrichtung
5　　Netzregeleinheit
21　　abregelbare Anlage

22    Verbraucher
23    Energiespeicher
24    Steuereinheit
25    Kommunikationsmodul
26    Photovoltaikanlage
27    Wechselrichter

**Patentansprüche**

1.  Verfahren zur Steuerung von Energieaustauschen zwischen mehreren Energiesystemen $i$ (2) über ein Stromnetz (3) mittels einer zentralen Steuervorrichtung (4), wobei die Steuervorrichtung (4) ein Optimierungsmodul umfasst, welches dazu ausgebildet ist, basierend auf einer Zielfunktion sowie von den Energiesystemen $i$ (2) übermittelten Daten die zu den Energieaustauschen zugehörigen Leistungen $\boldsymbol{P_{i;t}}$ innerhalb eines festgelegten Zeitbereiches $\boldsymbol{T = \bigcup_t \Delta t_t}$ durch ein Optimierungsverfahren zu ermitteln, wobei wenigstens eines der Energiesysteme $i^*$(2) eine bezüglich ihrer Leistung abregelbare Anlage (21) umfasst, **gekennzeichnet durch** die Schritte:

    - Übermitteln einer maximalen Energiemenge $\boldsymbol{E_{i;\mathrm{max}}}$ für den festgelegten Zeitbereich $\boldsymbol{T}$ **durch** jedes der Energiesysteme $i$ (2) an die Steuervorrichtung (4);
    - Übermitteln eines Abregelfaktors $\alpha$ für die abregelbare Anlage (21) **durch** das zugehörige Energiesystem $\boldsymbol{i^*}$ (2) an die Steuervorrichtung (4);
    - Ermitteln der Energieaustausche **durch** das Optimierungsmodul, wobei beim Optimierungsverfahren die Nebenbedingung

$$\alpha E_{i^*;\mathrm{max}} \leq \sum_{t \in T} P_{i^*;t}\, \Delta t_t \leq E_{i^*;\mathrm{max}}$$

    verwendet wird; und
    - Steuern der Energieaustausche innerhalb des Zeitbereiches $T$ gemäß der ermittelten Leistungen $P_{i;t}$.

2.  Verfahren gemäß Anspruch 1, **gekennzeichnet dadurch, dass** der Abregelfaktor $\alpha$ einen Wert im Bereich von 0 bis 1 aufweist.

3.  Verfahren gemäß Anspruch 1 oder 2, **gekennzeichnet dadurch, dass** jedes der Energiesysteme $i$ (2) eine maximale Leistung $P_{i;\mathrm{max}}$ an die Steuervorrichtung (4) übermittelt, wobei beim Optimierungsverfahren die zusätzlichen Nebenbedingungen $P_{i;t} \leq P_{i;\mathrm{max}}$ verwendet werden.

4.  Verfahren gemäß einem der vorhergehenden Ansprüche, **gekennzeichnet dadurch, dass** die mittels des Optimierungsverfahrens ermittelten Leistungen $P_{i;t}$ an eine jeweilige Steuereinheit (24) der jeweiligen Energiesysteme $i$ (2) zur Steuerung der Energieaustausche übermittelt werden.

5.  Verfahren gemäß einem der vorhergehenden Ansprüche, **gekennzeichnet dadurch, dass** die abregelbare Anlage (21) als Photovoltaikanlage (26) mit einem regelbaren Wechselrichter (27) ausgebildet ist.

6.  Verfahren gemäß Anspruch 5, **gekennzeichnet dadurch, dass** der Abregelfaktor $\alpha$ einen Wert von 0.7 aufweist.

7.  Verfahren gemäß einem der vorhergehenden Ansprüche, **gekennzeichnet dadurch, dass** innerhalb des Zeitbereiches $T$ in das Stromnetz (3) einspeisende Energiesysteme $j$ (2) einen Gewichtungsfaktor $g_{j;\mathrm{min};t}^{\mathrm{in}}$ und aus dem Stromnetz (3) ausspeisende Energiesysteme $k$ (2) einen Gewichtungsfaktor $g_{k;\mathrm{max};t}^{\mathrm{out}}$ an die Steuervorrichtung (4) übermitteln, wobei die Zielfunktion wenigstens den Term $\sum_{j \neq k; t \in T}[P_{j;t}^{\mathrm{in}}\, g_{j;t}^{\mathrm{in}} - P_{k;t}^{\mathrm{out}}\, g_{k;t}^{\mathrm{out}}]$ umfasst, wobei $P_{j;t}^{\mathrm{in}}$ eine Leistungseinspeisung des zugehörigen Energiesystems $j$ (2) in das Stromnetz (3) und $P_{i;t}^{\mathrm{out}}$ eine Leistungsausspeisung des zugehörigen Energiesystems $i$ (2) aus dem Stromnetz (3) kennzeichnet, wobei die für die Steuerung vorgesehenen Leistungen $P_{j;t}^{\text{in}}$, $P_{j;t}^{\text{out}}$ und die Gewichtungen $g_{j;t}^{\text{in}}$, $g_{k;t}^{\text{out}}$ durch das Optimierungsverfahren unter den zusätzlichen Nebenbedingungen $g_{j;\min;t}^{\text{in}} \leq g_{j;t}^{\text{in}}$ sowie $g_{k;t}^{\text{out}} \leq g_{k;\max;t}^{\text{out}}$ ermittelt werden.

**8.** Verfahren gemäß einem der vorhergehenden Ansprüche, **gekennzeichnet dadurch, dass** der Zeitbereich $T$ ein Tag ist.

**9.** Verfahren gemäß einem der vorhergehenden Ansprüche, **gekennzeichnet dadurch, dass** der Zeitbereich $T$ in regelmäßige Zeitschritte $\Delta t_t = \Delta t$ unterteilt wird.

**10.** Steuervorrichtung (4) zur Steuerung von Energieaustauschen zwischen mehreren Energiesystemen $i$ (2) über ein Stromnetz (3), wobei die Steuervorrichtung (4) ein Optimierungsmodul umfasst, welches dazu ausgebildet ist, basierend auf einer Zielfunktion sowie von den Energiesystemen $i$ (2) übermittelten Daten die zu den Energieaustauschen zugehörigen Leistungen $P_{i;t}$ innerhalb eines festgelegten Zeitbereich $T = U_t \Delta t_t$ durch ein Optimierungs-verfahren zu ermitteln, wobei wenigstens eines der Energiesysteme $i^*$ (2) eine bezüglich ihrer Leistung abregelbare Anlage (21) umfasst, **dadurch gekennzeichnet, dass** die Steuervorrichtung (4) dazu ausgebildet ist:

- eine maximale Energiemenge $E_{i;\max}$ für den festgelegten Zeitbereich $T$ von jedem der Energiesysteme $i$ (2) zu empfangen;
- einen Abregelfaktor $\alpha$ für die abregelbare Anlage (21) von dem zugehörigen Energiesystem $i^*$ (2) zu empfangen;
- die Energieaustausche durch das Optimierungsmodul zu ermitteln, wobei das Optimierungsmodul dazu ausgebildet ist, beim Optimierungsverfahren die Nebenbedingung

$$\alpha E_{i^*;\max} \leq \sum_{t \in T} P_{i^*;t} \, \Delta t_t \leq E_{i^*;\max}$$

zu verwenden; und
- die Energieaustausche innerhalb des Zeitbereiches $T$ gemäß der ermittelten Leistungen $P_{i;t}$ zu steuern.

## Claims

**1.** Method for controlling energy exchanges between a plurality of energy systems $i$ (2) via an electricity grid (3) by means of a central control apparatus (4), wherein the control apparatus (4) comprises an optimization module which is designed, on the basis of a target function and data transmitted by the energy systems $i$ (2), to ascertain the powers $P_{i;t}$ associated with the energy exchanges within a defined time range $T = U_t \, \Delta t_t$ by means of an optimization method, wherein at least one of the energy systems $i^*$ (2) comprises an installation (21) that can be curtailed with respect to its power, **characterized by** the steps of:

- each of the energy systems $i$ (2) transmitting a maximum amount of energy $E_{i;\max}$ for the defined time range $T$ to the control apparatus (4);
- the associated energy system $i^*$ (2) transmitting a curtailment factor $\alpha$ for the curtailable installation (21) to the control apparatus (4);
- the optimization module ascertaining the energy exchanges, wherein the secondary condition

$$\alpha E_{i^*;\max} \leq \sum_{t \in T} P_{i^*;t} \, \Delta t_t \leq E_{i^*;\max}$$

is used in the optimization method; and
- controlling the energy exchanges within the time range $T$ according to the ascertained powers $P_{i;t}$.

**2.** Method according to Claim 1, **characterized in that** the curtailment factor $\alpha$ has a value in the range of from 0 to 1.

**3.** Method according to Claim 1 or 2, **characterized in that** each of the energy systems $i$ (2) transmits a maximum power

$P_{i;\max}$ to the control apparatus (4), wherein the additional secondary conditions $P_{i;t} \leq P_{i;\max}$ are used in the optimization method.

4. Method according to one of the preceding claims, **characterized in that** the powers $P_{i;t}$ ascertained by means of the optimization method are transmitted to a respective control unit (24) of the respective energy systems $i$ (2) in order to control the energy exchanges.

5. Method according to one of the preceding claims, **characterized in that** the curtailable installation (21) is in the form of a photovoltaic installation (26) having a controllable inverter (27).

6. Method according to Claim 5, **characterized in that** the curtailment factor $\alpha$ has a value of 0.7.

7. Method according to one of the preceding claims, **characterized in that**, within the time range T, energy systems j (2) feeding into the electricity grid (3) transmit a weighting factor $g^{\text{in}}_{j;\min;t}$ and energy systems $k$ (2) feeding out of the electricity grid (3) transmit a weighting factor $g^{\text{out}}_{k;\max;t}$ to the control apparatus (4), wherein the target function comprises at least the term $\sum_{j \neq k;t \in T}[P^{\text{in}}_{j;t} g^{\text{in}}_{j;t} - P^{\text{out}}_{k;t} g^{\text{out}}_{k;t}]$ , wherein $P^{\text{in}}_{j;t}$ denotes a power infeed of the associated energy system $j$ (2) into the electricity grid (3) and $P^{\text{out}}_{i;t}$ denotes a power output of the associated energy system i (2) out of the electricity grid (3), wherein the powers $P^{\text{in}}_{j;t}$ , $P^{\text{out}}_{j;t}$ provided for the control, and the weightings $g^{\text{in}}_{j;t}$ , $g^{\text{out}}_{k;t}$ are ascertained by the optimization method using the additional secondary conditions $g^{\text{in}}_{j;\min;t} \leq g^{\text{in}}_{j;t}$ and $g^{\text{out}}_{k;t} \leq g^{\text{out}}_{k;max;t}$ .

8. Method according to one of the preceding claims, **characterized in that** the time range $T$ is a day.

9. Method according to one of the preceding claims, **characterized in that** the time range $T$ is divided into periodic time steps $\Delta t_t = \Delta t$.

10. Control apparatus (4) for controlling energy exchanges between a plurality of energy systems $i$ (2) via an electricity grid (3), wherein the control apparatus (4) comprises an optimization module which is designed, on the basis of a target function and data transmitted by the energy systems $i$ (2), to ascertain the powers $P_{i;t}$ associated with the energy exchanges within a defined time range $T = U_t \Delta t_t$ by means of an optimization method, wherein at least one of the energy systems $i^*$ (2) comprises an installation (21) that can be curtailed with respect to its power, **characterized in that** the control apparatus (4) is designed:

   - to receive a maximum amount of energy $E_{i;\max}$ from each of the energy systems $i$ (2) for the defined time range $T$;
   - to receive from the associated energy system $i^*$ (2) a curtailment factor $\alpha$ for the curtailable installation (21);
   - to ascertain the energy exchanges by way of the optimization module, wherein the optimization module is designed to use the secondary condition

$$\alpha E_{i^*;\max} \leq \sum_{t \in T} P_{i^*;t} \Delta t_t \leq E_{i^*;\max}$$

   in the optimization method; and
   - to control the energy exchanges within the time range $T$ according to the ascertained powers $P_{i;t}$.

**Revendications**

1. Procédé de commande d'échanges d'énergie entre plusieurs systèmes $i$ (2) d'énergie en passant par un réseau (3) de courant au moyen d'un dispositif (4) central de commande, dans lequel le dispositif (4) de commande comprend un module d'optimisation, qui est constitué pour, sur la base d'une fonction cible ainsi que des données transmises par des systèmes $i$ (2) d'énergie, déterminer par un procédé d'optimisation dans un laps de temps $T = U_t \Delta t_t$ fixé, les puissances $P_{i;t}$ allant avec les échanges d'énergie, dans lequel au moins l'un des systèmes $i^*$ (2) d'énergie comprend une installation (21) déréglable en ce qui concerne sa puissance, **caractérisé par** les stades :

- transmission au dispositif (4) de commande d'une quantité $E_{i;\max}$ d'énergie maximum pendant le laps de temps $T$ fixé par chacun des systèmes $i$ (2) d'énergie ;
- transmission au dispositif (4) de commande, par le système $i^*$ (2) d'énergie relevant, d'un facteur $\alpha$ de déréglage de l'installation (21) déréglable ;
- détermination des échanges d'énergie par le module d'optimisation, dans lequel on utilise dans le procédé d'optimisation la condition secondaire ;

$$\alpha E_{i^*;\max} \leq \sum_{t \in T} P_{i^*;t} \Delta t_t \leq E_{i^*;\max}$$

et
- commande des échanges d'énergie dans le laps de temps $T$ suivant les puissances $P_{i;t}$ déterminées.

2. Procédé suivant la revendication 1, **caractérisé en ce que** le facteur $\alpha$ de déréglage a une valeur dans la plage de 0 à 1.

3. Procédé suivant la revendication 1 ou 2, **caractérisé en ce que** chacun des systèmes $i$ (2) d'énergie transmet une puissance $P_{i;\max}$ au dispositif (4) de commande, dans lequel on utilise dans le procédé d'optimisation les conditions $P_{i;t} \leq P_{i;\max}$ secondaires supplémentaires.

4. Procédé suivant l'une des revendications précédentes, **caractérisé en ce que** l'on transmet pour la commande des échanges d'énergie les puissances $P_{i;t}$ déterminées au moyen d'un procédé d'optimisation à une unité (24) de commande respective des systèmes $i$ (2) d'énergie respectifs.

5. Procédé suivant l'une des revendications précédentes, **caractérisé en ce que** l'installation (21) déréglable est constituée sous la forme d'une installation (26) photovoltaïque ayant un onduleur (27) réglable.

6. Procédé suivant la revendication 5, **caractérisé en ce que** le facteur $\alpha$ de déréglage a une valeur de 0,7.

7. Procédé suivant l'une des revendications précédentes, **caractérisé en ce que** dans le laps de temps $T$ des systèmes $j$ (2) d'énergie alimentant le réseau (3) de courant, on transmet au dispositif (4) de commande un facteur $g_{j;\min;t}^{\text{in}}$ de pondération et, des systèmes $k$ (2) d'énergie alimentés à partir du réseau (3) de courant, un facteur $g_{k;\max;t}^{\text{out}}$ de pondération, dans lequel la fonction cible comprend au moins le terme $\sum_{j \neq k; t \in T}[P_{j;t}^{\text{in}} g_{j;t}^{\text{in}} - P_{k;t}^{\text{out}} g_{k;t}^{\text{out}}]$ , dans lequel $P_{j;t}^{\text{in}}$ caractérise une entrée de puissance du système $j$ (2) d'énergie relevant dans le réseau (3) d'énergie et $P_{i;t}^{\text{out}}$ une sortie de puissance du système $i$ (2) d'énergie relevant à partir du réseau (3) de courant, dans lequel on détermine les puissances $P_{j;t}^{\text{in}}$, $P_{j;t}^{\text{out}}$ prévues pour la commande et les pondérations $g_{j;t}^{\text{in}}$, $g_{k;t}^{\text{out}}$ par le procédé d'optimisation avec les conditions $g_{j;\min;t}^{\text{in}} \leq g_{j;t}^{\text{in}}$ ainsi que $g_{k;t}^{\text{out}} \leq g_{k;\max;t}^{\text{out}}$ secondaires supplémentaires.

8. Procédé suivant l'une des revendications précédentes, **caractérisé en ce que** le laps de temps $T$ est de 1 jour.

9. Procédé suivant l'une des revendications précédentes, **caractérisé en ce que** l'on subdivise le laps de temps $T$ en créneaux $\Delta t_t = \Delta t$ temporels réguliers.

10. Dispositif (4) de commande pour la commande d'échanges d'énergie entre plusieurs systèmes $i$ (2) d'énergie en passant par un réseau de courant (3), dans lequel le dispositif (4) de commande comprend un module d'optimisation, qui est conçu pour, sur la base d'une fonction cible ainsi que des données transmises par des systèmes $i$ (2) d'énergie, déterminer par un procédé d'optimisation dans un laps de temps $T = U_t \Delta t_t$ fixé, les puissances $P_{i;t}$ allant avec les échanges d'énergie, dans lequel au moins l'un des systèmes $i^*$ (2) d'énergie comprend une installation (21) déréglable en ce qui concerne sa puissance, **caractérisé en ce que** le dispositif (4) de commande est constitué pour :

- recevoir une quantité $E_{i;max}$ d'énergie maximum pendant le laps de temps $T$ fixé de chacun des systèmes $i$ (2) d'énergie ;
- recevoir un facteur $\alpha$ de déréglage de l'installation (21) déréglable du système $i^*$ (2) d'énergie qui en relève ;
- déterminer les échanges d'énergie par le module d'optimisation, dans lequel le module d'optimisation est constitué pour utiliser dans le procédé d'optimisation la condition secondaire ;

$$\alpha E_{i^*;max} \leq \sum_{t \in T} P_{i^*;t} \Delta t_t \leq E_{i^*;max}$$

et
- commander les échanges d'énergie dans le laps de temps $T$ suivant les puissances $P_{i;t}$ déterminées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1
- DE 102008037575 A1
- DE 102013217572 A1